(19) Europäisches Patentamt
European Patent Office
Office européen des brevets

(11) EP 0 869 569 B1

(12) FASCICULE DE BREVET EUROPEEN

(45) Date de publication et mention de la délivrance du brevet:
**05.06.2002 Bulletin 2002/23**

(51) Int Cl.[7]: **H01M 10/24**, H01M 10/30

(21) Numéro de dépôt: **98400586.8**

(22) Date de dépôt: **12.03.1998**

# (54) Accumulateur à électrolyte alcalin de type industriel ouvert sans maintenance

Wartungsfreier industrieller Akkumulator mit alkalischem Elektrolyten

Maintenance-free industrial type accumulator with alcaline electrolyte

(84) Etats contractants désignés:
**DE FR GB IT SE**

(30) Priorité: **13.03.1997 FR 9702989**

(43) Date de publication de la demande:
**07.10.1998 Bulletin 1998/41**

(73) Titulaire: **ALCATEL**
**75008 Paris (FR)**

(72) Inventeurs:
- **Sanchez, Patrick**
  **33290 Le Pian Médoc (FR)**
- **Metayer, Edith**
  **33110 Le Bouscat (FR)**
- **Bariand, Marc**
  **33000 Bordeaux (FR)**
- **Liska, Jean-Louis**
  **33200 Bordeaux (FR)**

(74) Mandataire: **El Manouni, Josiane et al**
**COMPAGNIE FINANCIERE ALCATEL**
**Dépt. Propr. Industrielle**
**30, avenue Kléber**
**75116 Paris (FR)**

(56) Documents cités:
**EP-A- 0 070 646**
**EP-A- 0 354 966**
**EP-A- 0 401 076**
**EP-A- 0 666 608**
**WO-A-97/15958**
**FR-A- 2 628 892**
**GB-A- 2 203 280**
**US-A- 4 880 435**

- **PATENT ABSTRACTS OF JAPAN vol. 009, no. 321 (E-367), 17 décembre 1985 & JP 60 154477 A (SHINKOUBE DENKI KK), 14 août 1985,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un générateur électrochimique secondaire ouvert à électrolyte alcalin aqueux de type industriel, c'est à dire de forte capacité comprise entre 10 et 200Ah, et dit ouvert car fonctionnant à basse pression (inférieure à 1 bar relatif). Ces accumulateurs sont notamment de type nickel-cadmium (Ni-Cd) ou nickel-métal hydrurable (Ni-MH).

Un accumulateur de type industriel ouvert comporte un faisceau comprenant plusieurs couples électrochimiques composés d'une électrode positive, d'une électrode négative, et d'un séparateur peu perméable aux gaz disposé entre les électrodes négative et positive, et un électrolyte alcalin dans lequel le faisceau est immergé et dont le niveau dépasse le bord supérieur des électrodes. Le fonctionnement des accumulateurs à électrolyte aqueux provoque des réactions de dégagement gazeux en surcharge, respectivement d'oxygène sur l'électrode positive et d'hydrogène sur l'électrode négative. Un accumulateur ouvert fonctionne à une pression relative (différence de pression par rapport à la pression atmosphérique) inférieure à 1 bar et les gaz produits en surcharge s'échappent, entraînant ainsi une consommation de l'eau de l'électrolyte. Cet accumulateur exige donc une maintenance régulière, c'est-à-dire qu'il convient de rajouter de l'eau périodiquement. La fréquence de maintenance est fonction des conditions de fonctionnement de l'accumulateur dans l'application considérée, notamment de la capacité chargée.

Pour éviter les remises à niveau d'électrolyte consécutives aux périodes de fonctionnement, on a mis au point des accumulateurs de type industriel étanches dérivés de ceux précédemment décrits (EP-0 666 608). Un accumulateur de type industriel (forte capacité) étanche comporte un faisceau comprenant plusieurs couples électrochimiques composés d'une électrode positive, d'une électrode négative, et d'un séparateur perméable aux gaz disposé entre les électrodes négative et positive, un électrolyte alcalin en quantité limitée et un dispositif pour la recombinaison de l'oxygène. L'oxygène formé sur l'électrode positive conduit à une élévation de la pression interne de l'accumulateur qui dépend du régime de surcharge utilisé. Il s'établit ensuite un régime permanent au cours duquel l'oxygène produit à l'électrode positive est réduit, ou recombiné, sur l'électrode négative. Un accumulateur industriel étanche possède une soupape de sécurité fonctionnant à une pression relative supérieure à 1 bar. Si un accumulateur étanche permet de résoudre le problème technique lié à la maintenance, il possède une énergie massique et une énergie volumique inférieure à celle d'un accumulateur ouvert. D'une part l'accumulateur étanche possède une précharge, ainsi qu'un excédent de capacité négative destiné à prévenir le dégagement d'hydrogène en fin de charge. D'autre part ces accumulateurs contenant une quantité d'électrolyte limitée, par conséquent le rendement de la matière active est plus faible que dans les accumulateurs ouverts.

Il est donc apparu souhaitable de s'orienter vers la réduction de la maintenance des accumulateurs ouverts. La demande de brevet européen EP-0 401 076 propose une autolimitation de la charge d'un accumulateur Ni-Cd basée sur l'augmentation brutale de la tension à la fin de la charge. Cet accumulateur industriel ouvert fonctionne à une pression relative inférieure à 1 bar et comporte un excédent d'électrolyte.

Le but de la présente invention est de proposer un accumulateur industriel ouvert ne nécessitant pas de maintenance qui présente des énergies massique et volumique supérieures à celles d'un accumulateur industriel étanche.

La présente invention a pour objet un accumulateur de type industriel ouvert sans maintenance selon la revendication 1.

L'accumulateur selon l'invention fonctionne dans les premiers cycles comme un accumulateur ouvert. L'abondance de l'électrolyte permet d'atteindre et de conserver les performances élevées des accumulateurs ouverts. Tant que l'électrolyte est excédentaire, le dispositif de recombinaison est peu accessible et la réduction de l'oxygène n'est pas favorisée. Pendant la charge la pression gazeuse s'élève et la soupape laisse échapper les gaz, il y a donc consommation d'eau. On estime la perte d'eau à environ 0,3 $cm^3$ par ampère-heure surchargé. Puis au fur et à mesure que l'électrolyte excédentaire est consommé, la réduction de l'oxygène se produit avec un rendement meilleur. Après quelques cycles l'accumulateur a atteint un équilibre entre le dégagement et la recombinaison de l'oxygène. La pression interne dans l'accumulateur reste inférieure à la pression de fonctionnement de la soupape, généralement comprise entre 0,5 bar et 1 bar. L'accumulateur selon l'invention fonctionne alors comme un accumulateur étanche et ne nécessite plus de maintenance.

Les électrodes négatives possèdent une surcapacité peu élevée vis à vis de la capacité des électrodes positives. En fin de charge, les électrodes négatives se trouvent complètement chargées. De préférence ladite capacité totale desdites électrodes négatives est comprise entre 100% et 150% de ladite capacité totale desdites électrodes positives.

Le séparateur perméable au gaz autorise l'accès de l'électrode négative à l'oxygène généré à l'électrode positive, afin que s'y produise la recombinaison. La présence d'un dispositif de recombinaison augmente sensiblement la vitesse de recombinaison et permet de parvenir à un équilibre, même à des régime élevés. Un tel système de recombinaison est décrit dans le document EP-A-0 666 608 publié le 09/08/95.

Avantageusement la distance séparant lesdites électrodes négatives desdites électrodes positives est comprises entre 0,2mm et 0,5mm. La distance inter-électrodes est choisie la plus faible possible en évitant le risque de court-circuit. Selon les applications elle peut aller de 0,2mm pour des applications peu exigeantes, comme par exemple le domaine aéronautique, jusqu'à 0,5mm lorsque les conditions de cyclage entraînent des variations dimensionnelles des électrodes plus importantes,notamment dans le cas de l'utilisation dans un véhicule électrique.

Selon une variante, lesdites électrodes positives sont de type fritté et lesdites électrodes négatives sont de type empâté sur un support conducteur choisi parmi un support bidimensionnel, comme un feuillard plein ou perforé, un métal déployé, une grille ou un tissu, et un support tridimensionnel, comme une mousse ou un feutre.

Selon une autre variante, lesdites électrodes positives sont de type empâté sur un support conducteur tridimensionnel et lesdites électrodes négatives sont de type empâté sur un support conducteur choisi parmi un support bidimensionnel et un support tridimensionnel.

L'accumulateur sans maintenance conforme à l'invention est particulièrement adapté à une utilisation dans le domaine aéronautique ou ferroviaire, ainsi que pour la propulsion de véhicules électriques.

L'invention sera mieux comprise et d'autres avantages et particularités apparaîtront à la lecture de la description qui va suivre d'un mode de réalisation, donnée à titre illustratif et non limitatif, accompagnée des dessins annexés:

- la figure 1 est une coupe partielle d'un accumulateur selon la présente invention,
- la figure 2 représente la variation de la tension U en volts de l'accumulateur selon l'invention en fonction de son taux de charge T en %,
- la figure 3 montre l'évolution de la quantité excédentaire V d'électrolyte qui a été initialement introduite dans l'accumulateur selon l'invention exprimé en % par rapport à la quantité d'électrolyte absorbée par le faisceau électrochimique et le dispositif de recombinaison en fonction du nombre de cycles N effectués.

Comme le montre la figure 1, un accumulateur ouvert selon l'invention se compose d'un bac 1 de forme parallélépipèdique en matière plastique et d'un faisceau électrochimique 2 comportant plusieurs couples d'électrodes composés d'une électrode positive 3 3 et d'une électrode négative 4 encadrant un séparateur 5 perméable aux gaz.

A l'extrémité du faisceau 2, se trouve placée une électrode de recombinaison 6 associée un espaceur 7, de préférence incompressible et hydrophobe. L'électrode de recombinaison 6 est connectée électriquement à la polarité négative. Habituellement le faisceau électrochimique comporte une électrode négative supplémentaire de telle sorte qu'il se trouve encadré par deux électrodes négatives externes 4', chacune d'elles étant accolée à une électrode de recombinaison 6 associée à un espaceur 7.

A titre d'exemple on réalise un accumulateur A du type nickel-cadmium sans maintenance selon l'invention. L'électrode négative du type plastifiéest constituée d'un feuillard perforé en acier nickelé sur lequel est déposée une pâte comprenant un liant polymère, du cadmium sous forme métallique (Cd métal) et sous forme oxyde (CdO) et des additifs usuels de mise en forme. L'électrode positive de type fritté est formée d'un support poreux de nickel fritté dans lequel est incorporé une matière active à base d'hydroxyde de nickel. Le séparateur perméable aux gaz est constitué de deux couches de feutre de polypropylène et imprégné d'électrolyte qui est une solution aqueuse de potasse KOH et de lithine LiOH à une concentration de 7,8N.

La quantité d'électrolyte introduite dans l'accumulateur correspond au volume d'électrolyte absorbé par le faisceau électrochimique et le dispositif de recombinaison (quantité de référence), augmentée d'une quantité excédentaire correspondant à l'immersion complète du faisceau électrochimique et du dispositif de recombinaison jusqu'au recouvrement de l'extrémité supérieure du faisceau électrochimique. Cette quantité excédentaire représente au moins 32% de la quantité de référence. La soupape s'ouvre vers l'extérieur quand la différence de pression entre l'intérieur de l'accumulateur et la pression atmosphérique extérieure est au moins égale à 0,5 bar.

A titre de comparaison, on réalise un accumulateur industriel étanche B du type nickel-cadmium. Cet accumulateur diffère de l'accumulateur A par le fait qu'il ne contient pas de quantité excédentaire en électrolyte, qu'il possède un excédent de capacité négative non chargée permettant d'éviter le dégagement d'hydrogène en fin de charge de l'accumulateur, et qu'il est équipé d'une soupape de sécurité dont la pression d'opération est supérieure à 1 bar relatif.

A titre de comparaison on réalise un accumulateur industriel ouvert C du type nickel-cadmium. Cet accumulateur diffère de l'accumulateur A par le fait qu'il contient un séparateur imperméable aux gaz constitué de deux couches de feutre de polypropylène et d'une membrane microporeuse. L'électrolyte est une solution aqueuse de potasse KOH et de lithine LiOH à une concentration de 6N.

La quantité d'électrolyte introduite dans l'accumulateur correspond au volume d'électrolyte absorbé par le faisceau électrochimique (quantité de référence), augmentée d'une quantité excédentaire correspondant à l'immersion complète du faisceau électrochimique jusqu'au recouvrement de l'extrémité supérieure du faisceau électrochimique et son dépassement sur une hauteur de 20mm. Cette quantité excédentaire représente 60% de la quantité de référence.

Les accumulateurs A, B et C sont évalués électrochimiquement par les tests comparatifs suivants.

(I) - Test de capacité.

Un test de capacité est effectué pour déterminer la capacité réelle de l'accumulateur :

charge à Ic/5, où Ic est le régime permettant la décharge de la capacité dudit accumulateur en 1 heure, puis

- surcharge à Ic/10 avec un coefficient de surcharge de +50%,
- décharge à Ic/2 jusqu'à une tension d'arrêt de 0,9 Volts;

Les caractéristiques initiales des accumulateurs A, B et C y compris les capacités réellement mesurées sont consignées dans le tableau I ci-après. Le gain correspond à la différence entre les capacités réelle et nominale rapportée à la capacité nominale.

TABLEAU I

| Caractéristiques initiales: | A | B | C |
|---|---|---|---|
| Distance inter-électrodes (mm) | 0,5 | 0,25 | 0,5 |
| Electrolyte excédentaire (%) | +32 | 0 | +60 |
| Capacité nominale (Ah/électrode) | 3,1 | 3,1 | 3,1 |
| Capacité réelle (Ah/électrode) | 3,5 | 3,1 | 3,5 |
| Gain (%) | +13 | 0 | +13 |

En début de vie, la capacité restituée par l'accumulateur B est conforme à celle de la théorie; celles restituées par les accumulateurs A et C est supérieure à ce qui avait été prévu, et traduit la forte activation de l'électrode positive liée à l'excédent d'électrolyte.

(II) - Test de cyclage.

Un test de cyclage de 270 cycles a été effectué afin d'observer le comportement électrochimique de l'accumulateur:

- charge à Ic/5,
- surcharge à Ic/10 avec un coefficient de surcharge de +20%,
- repos pendant 1 h,
- décharge à Ic/2 jusqu'à une profondeur de décharge correspondant à 70% de la capacité nominale,
- repos pendant 4 h,

Les résultats comparatifs du fonctionnement des accumulateurs A, B et C au cours des 44 premiers cycles sont rassemblés dans le tableau II ci-après. On a consigné dans le tableau II la pression interne, la variation de masse et le taux de recombinaison observés après une surcharge au régime de Ic/10. La pression interne est limité par la soupape à 0,5 bar dans le cas de l'accumulateur A; la pression interne atteinte par l'accumulateur B dans ce cas est bien inférieure à la limite imposée par la soupape.

Le taux de recombinaison R est calculé selon la relation

$$R = 100 \times [ 1 - \Delta m / (E \times S) ]$$

où $\Delta m$ est la variation de masse du générateur c'est à dire la perte d'eau, E = 0,33 correspond à la quantité d'eau consommée pour 1 ampère-heure surchargé et S est le nombre d'ampères-heures surchargés, donc (E x S) représente la perte d'eau théorique.

## TABLEAU II

| | A | B | C |
|---|---|---|---|
| Pression interne (bar) | 0,5 | 0,6 | 0 |
| Perte de masse par cycle (mg) | 393 | 0 | 1300 |
| Taux de recombinaison (%) | 75 | 100 | 15 |

La consommation théorique est de 66g d'eau pour l'accumulateur A selon l'invention durant les 44 premiers cycles où 200Ah ont été surchargés. On constate que la perte de masse totale de l'accumulateur A au cours de ce cyclage est de 17,3g donc bien inférieure à la quantité théorique. La pression interne est fixée à 0,5 bar par la soupape.

Pour l'accumulateur B en cyclage, la pression interne est stabilisée à 0,6 bar et la masse ne varie pas. Quant à l'accumulateur C, dont la pression interne n'est pas limitée par la soupape, des remises à niveau périodiques se sont avérées nécessaires au cours du cyclage.

Les résultats du tableau III ci-dessous montrent les valeurs de pertes de masse et de taux de recombinaison au cours du cyclage de l'accumulateur A selon l'invention effectué dans les mêmes conditions que précédemment jusqu'à 270 cycles.

## TABLEAU III

| | Cycles 45 à 147 | Cycles 149 à 249 | Cycles 252 à 270 |
|---|---|---|---|
| Perte de masse par cycle (mg) | 168 | 7 | 0 |
| Taux de recombinaison (%) | 88 | 99,5 | 100 |
| Pression interne (bar) | 0,5 | ≈ 0,5 | < 0,5 |

On distingue au cours du cyclage trois phases de fonctionnement pour l'accumulateur A selon l'invention. Durant les premiers cycles la pression interne est supérieure à la pression d'ouverture de la soupape, ce qui conduit à une consommation d'électrolyte importante à chaque cycle car la soupape laisse échapper les gaz. Une phase intermédiaire lui succède où la pression et la masse se stabilisent.

Enfin, après environ 250 cycles de charge/décharge, la pression interne est inférieure à la pression d'ouverture de la soupape. Le taux de recombinaison est voisin de 100% ce qui traduit un comportement proche d'un accumulateur étanche.

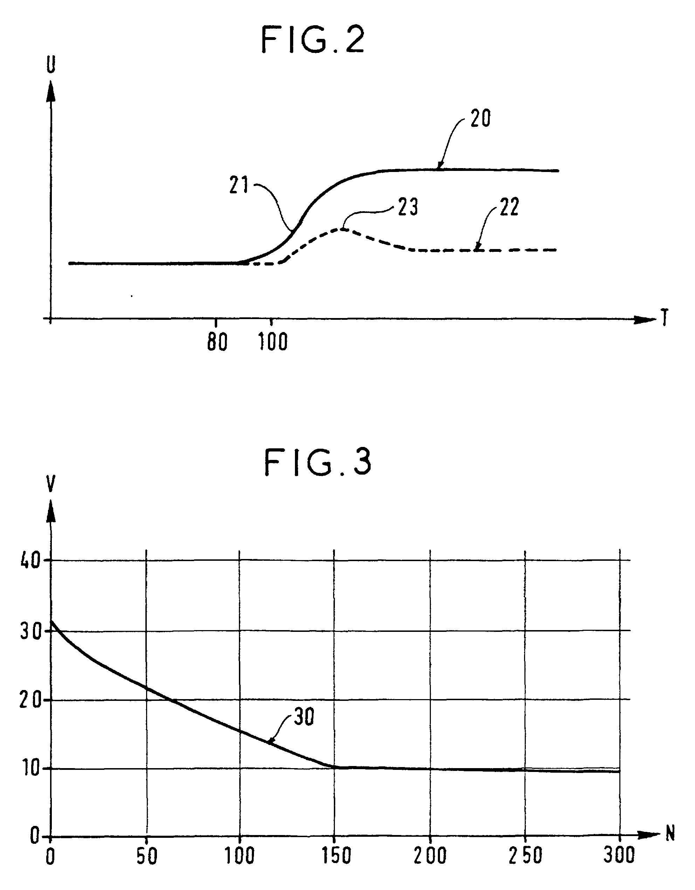

La courbe 20 de la figure 2 représente la courbe de charge d'un accumulateur industriel ouvert nécessitant de la maintenance. Lorsque l'accumulateur est chargé (taux de charge ≥ 100%), se produit le dégagement d'hydrogène 21 à l'électrode négative correspondant à la surcharge.

La courbe 22 de la figure 2 représente la courbe de charge de l'accumulateur industriel ouvert sans maintenance selon l'invention après 250 cycles. La recombinaison des gaz 23 réduit la montée en pression. Il ne se produit pas de dégagement d'hydrogène.

La courbe 30 de la figure 3 montre que l'excès d'électrolyte introduit initialement (+32%) décroît nettement jusqu'au cycle 149, puis tend à se stabiliser à une valeur de l'ordre de +10%.

Les capacités observées après 272 cycles sont consignées dans le tableau IV ci-dessous.

## TABLEAU IV

| | A | B | C |
|---|---|---|---|
| Capacité nominale (Ah/électrode) | 3,1 | 3,1 | 3,1 |
| Capacité réelle initiale (Ah/électrode) | 3,5 | 3,1 | 3,5 |
| Capacité après 272 cycles (Ah/électrode) | 3,8 | 3,3 | 3,8 |

Pour l'accumulateur étanche B, la capacité mesurée à l'issue du cyclage est conforme à la capacité prévue lors de la conception et la réalisation du générateur. Pour l'accumulateur ouvert C et l'accumulateur A sans maintenance selon l'invention, la capacité obtenue est supérieure de plus de 20% (22,6 %) à la valeur théorique.

Les tests électriques ci-dessus mettent en évidence pour l'accumulateur A selon l'invention les particularités suivantes :

- une capacité supérieure à celle prévue lors de la conception,
- une consommation en électrolyte très faible à partir de 150 cycles et quasiment nulle après 250 cycles,
- une stabilité de la capacité en cyclage,
- un comportement très proche d'un accumulateur industriel étanche avec une pression interne inférieure à 0,5 bar après 250 cycles.

L'accumulateur industriel ouvert sans maintenance de l'invention conduit à des gains de l'ordre de 15 à 30% en énergie massique et de 20 à 40% en énergie volumique par rapport à un accumulateur industriel étanche de l'art antérieur.

**Revendications**

1. Accumulateur sans maintenance de capacité comprise entre 10 et 200Ah comportant

   - un faisceau électrochimique comprenant au moins une électrode positive dont la matière électrochimiquement active est à base d'hydroxyde de nickel, une électrode négative, et un séparateur perméable à l'oxygène disposé entre ladite électrode négative et ladite électrode positive, la capacité totale de ladite électrode négative étant supérieure à la capacité totale de ladite électrode positive et la distance séparant ladite électrode négative de ladite électrode positive étant comprise entre 0,2mm et 0,5mm,
   - un électrolyte alcalin aqueux recouvrant l'extrémité supérieure dudit faisceau avant cyclage électrique,
   - un dispositif pour la recombinaison de l'oxygène,
   - une soupape dont la pression relative de fonctionnement est inférieure à 1 bar.

2. Accumulateur selon la revendication 1, dans lequel ladite capacité totale desdites électrodes négatives est comprise entre 100% et 150% de ladite capacité totale desdites électrodes positives.

3. Accumulateur selon l'une des revendications précédentes, dans lequel ledit dispositif de recombinaison comprend une électrode de recombinaison connectée électriquement à la polarité négative associée à un espaceur.

4. Accumulateur selon l'une des revendications précédentes, dans lequel lesdites électrodes positives sont de type fritté et lesdites électrodes négatives sont de type empâté sur support conducteur choisi parmi un support bidimensionnel et un support tridimensionnel.

5. Accumulateur selon l'une des revendications 1 à 3, dans lequel lesdites électrodes positives sont de type empâté sur un support conducteur tridimensionnel et lesdites électrodes négatives sont de type empâté sur un support conducteur choisi parmi un support bidimensionnel et un support tridimensionnel.

## Patentansprüche

1. Wartungsfreier Akkumulator mit einer Kapazität zwischen 10 und 200 Ah, welcher umfasst

   - ein elektrochemisches Bündel mit wenigstens einer positiven Elektrode, deren elektrochemisch aktives Material auf Nickelhydroxid basiert,
   - eine negative Elektrode, und ein zwischen der negativen Elektrode und positiven Elektrode angeordneter, für Sauerstoff durchlässiger Separator, wobei die Gesamtkapazität der negativen Elektrode oberhalb der Gesamtkapazität der positiven Elektrode ist und der die negative Elektrode und positive Elektrode trennende Abstand zwischen 0,2 mm und 0,5 mm liegt,
   - ein wässriger alkalischer Elektrolyt, der das obere Ende des Bündels vor dem elektrischen Zyklus bedeckt,
   - eine Vorrichtung zur Rekombination von Sauerstoff,
   - ein Ventil, dessen relativer Funktionsdruck unterhalb von 1 bar liegt.

2. Akkumulator nach Anspruch 1, bei welchem die Gesamtkapazität der negativen Elektroden zwischen 100% und 150% der Gesamtkapazität der positiven Elektroden liegt.

3. Akkumulator nach einem der vorhergehenden Ansprüche, bei welchem die Rekombinationsvorrichtung eine Rekombinationselektrode umfasst, die an die negative Polarität elektrisch gekoppelt und mit einem Abstandshalter verbunden ist.

4. Akkumulator nach einem der vorhergehenden Ansprüche, bei welchem die positiven Elektroden gesintert sind und die negativen Elektroden auf einen leitfähigen Träger, der aus einem zweidimensionalen Träger und einem dreidimensionalen Träger gewählt ist, pastiert sind.

5. Akkumulator nach einem der Ansprüche 1 bis 3, bei welchem die positiven Elektroden auf einen leitfähigen dreidimensionalen Träger pastiert sind und die negativen Elektroden auf einen leitfähigen Träger, der aus einem zweidimensionalen Träger und einem dreidimensionalen Träger gewählt ist, gastiert sind.

## Claims

1. A maintenance-free storage battery having a capacity in the range 10 Ah to 200 Ah including

   - an electrode assembly comprising at least one positive electrode the electrochemically active material of which is based on nickel hydroxide, one negative electrode, and one separator permeable to oxygen disposed between said negative electrode and said positive electrode, the total capacity of said negative electrode being greater than the total capacity of said positive electrode, and the distance between said negative electrode and said positive electrode being in the range 0.2 mm to 0.5 mm,
   - an aqueous alkaline electrolyte covering the top end of said assembly before electrical cycling,
   - an oxygen recombination device,
   - a valve the relative operating pressure of which is less than 1 bar.

2. The storage battery according to claim 1 wherein said total capacity of said negative electrodes is in the range 100% to 150% of said total capacity of said positive electrodes.

3. The storage battery according to either of the preceding claims wherein said recombination device includes a recombination electrode electrically connected to the negative polarity associated with a spacer.

4. The storage battery according to any of the preceding claims wherein said positive electrodes are of the sintered type and said negative electrodes are of the paste type on a two-dimensional or a three-dimensional conductive support.

5. The accumulator according to any of claims 1 to 3 wherein said positive electrodes are of the paste type on a three-dimensional conductive support and said negative electrodes are of the paste type on a two-dimensional or a three-dimensional conductive support.

FIG.1

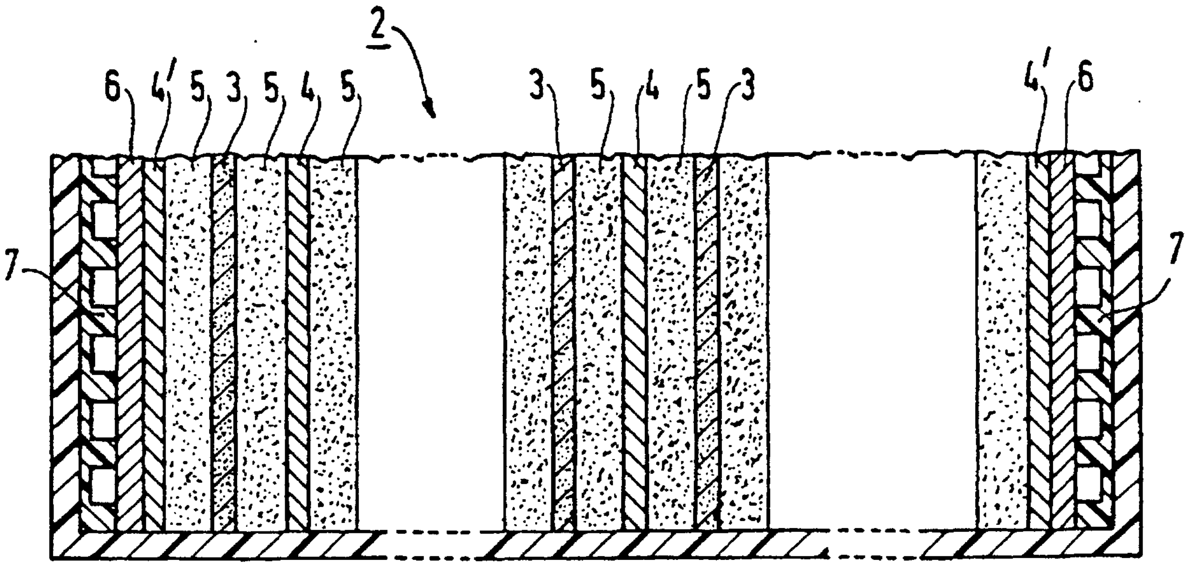

FIG.2

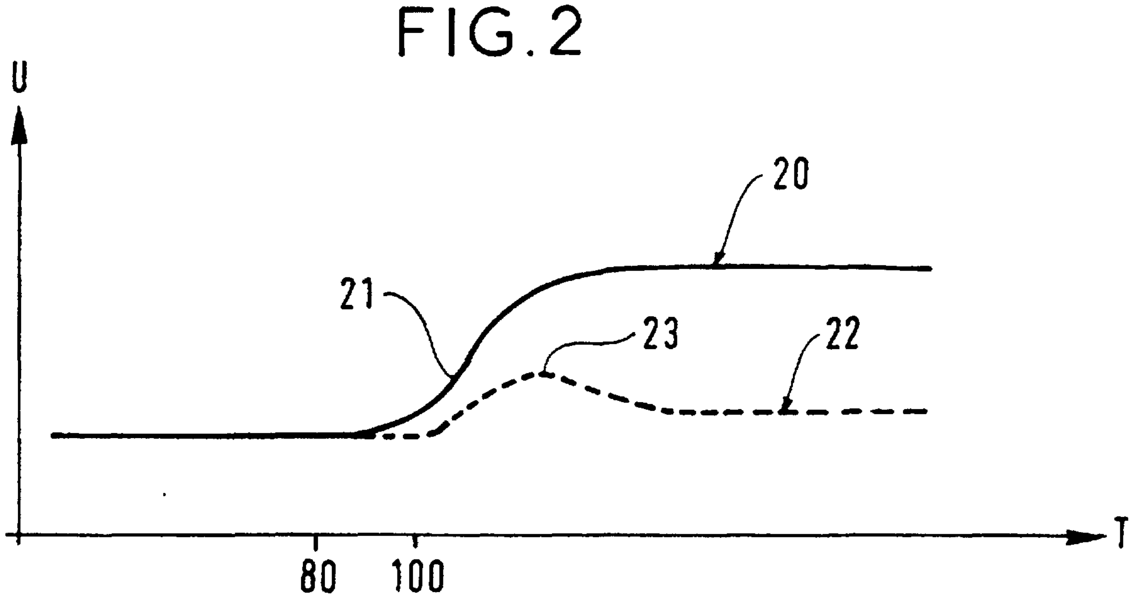


FIG.3